# EUROPEAN PATENT APPLICATION

(11) **EP 3 032 542 A1**
(43) Date of publication of application: **15.06.2016**
(21) Application number: 15198757.5
(22) Date of filing: 09.12.2015
(51) Int. Cl.: G21F 9/12, B01J 20/00, G21F 9/16, G21F 9/30

(54) **DISPOSAL METHOD AND DISPOSAL APPARATUS FOR AN RADIOACTIVE SUBSTANCE ADSORBENT**

(30) Priority: 12.12.2014 JP 2014251511
(71) Applicant: Kabushiki Kaisha Toshiba, Tokyo 105-8001 (JP)
(72) Inventor: NAKAMURA, Hideki, Tokyo, 105-8001 (JP); ABE, Hiroko, Tokyo, 105-8001 (JP); SUSA, Shunsuke, Tokyo, 105-8001 (JP); INOUE, Yuki, Tokyo, 105-8001 (JP); SUGIMORI, Toshiaki, Tokyo, 105-8001 (JP); SHIMODA, Chiaki, Tokyo, 105-8001 (JP); KANEKO, Masaaki, Tokyo, 105-8001 (JP); TAKAKURA, Keita, Tokyo, 105-8001 (JP)
(74) Representative: Moreland, David

(57) **Abstract**

A disposal method for a radioactive substance adsorbent includes:
a mixing step (S1) mixing a clay mineral and the radioactive substance adsorbent, the radioactive substance adsorbent containing ferrocyanide;
a pressing step (S2) press molding the radioactive substance adsorbent and the clay mineral which have been mixed in the mixing step (S1); and
a heating step (S3) heating the radioactive substance adsorbent and the clay mineral which have been press molded in the pressing step (S2).

## Description

### FIELD

Embodiments described herein relate generally to a disposal method for a radioactive substance adsorbent and a disposal apparatus for a radioactive substance adsorbent.

### BACKGROUND

There are proposed various methods for retrieving and immobilizing a radioactive substance from radioactive waste containing the radioactive substance such as radioactive cesium.

For example, radioactive cesium is retrieved by using a zeolite-based mineral such as mordenite as a radioactive substance adsorbent. In such a case, since a large amount of the zeolite-based minerals is used, a cost and an amount of waste become considerable. Thus, it is tried to use ferrocyanide such as Prussian blue (ferric ferrocyanide) instead of the zeolite-based mineral as the adsorbent for the radioactive substance.

The ferrocyanide is capable of being mass-produced economically and a dissociation constant (K ≈ 10⁻³⁶) of CN⁻ is small. Further, the ferrocyanide has a high adsorption capacity of adsorbing a radioactive substance such as radioactive cesium. However, the ferrocyanide releases cyan at a high concentration, for example, under a high pH environment, under an environment of being exposed to ultraviolet rays, and under a reducing atmosphere. Here, as final disposal of the radioactive substance adsorbent, disposal by laying underground is considered. There is a possibility, for example, that the ferrocyanide having been subjected to final disposal is immersed with rainwater or groundwater after being laid underground, causing cyan elution.

Note that as a general countermeasure against cyan, it is known to decompose cyanide by oxidative decomposition, biolysis, and photolysis. However, by these methods, it is difficult to efficiently dispose of a radioactive substance adsorbent to which a radioactive substance has been adsorbed.

### SUMMARY

According to one aspect of the present invention, there is provided a disposal method for a radioactive substance adsorbent. The disposal method includes a mixing step (S1) mixing a clay mineral and the radioactive substance adsorbent that contains ferrocyanide, a pressing step (S2) press molding the radioactive substance adsorbent and the clay mineral which have been mixed in the mixing step (S1), and a heating step (S3) heating the radioactive substance adsorbent and the clay mineral which have been press molded in the pressing step (S2).

### BRIEF DESCRIPTION OF THE DRAWINGS

FIG. 1 is flowchart showing a disposal method for a radioactive substance adsorbent of an embodiment.
FIG. 2 is a schematic diagram showing a disposal apparatus for a radioactive substance absorbent of an embodiment.
FIG. 3 is a graph showing a relationship of a residual ratio of cesium, a hardness, a press molding pressure, and a mixture ratio of iron ferrocyanide, of a solidified body fabricated by using vermiculite and iron ferrocyanide.
FIG. 4 is a graph showing a relationship of a residual ratio of cesium, a press molding pressure, and a mixture ratio of iron ferrocyanide, of a solidified body fabricated by using kaolin and iron ferrocyanide.
FIG. 5 is a graph showing a relationship of a residual ratio of cesium, a hardness, a press molding pressure, and a mixture ratio of iron ferrocyanide, of a solidified body fabricated by using zeolite and iron ferrocyanide.
FIG. 6 is a graph showing a measured result of X-ray diffraction (XRD) of the solidified body fabricated by using vermiculite and iron ferrocyanide.

### DETAILED DESCRIPTION

Hereinafter, embodiments will be described with reference to the drawings.

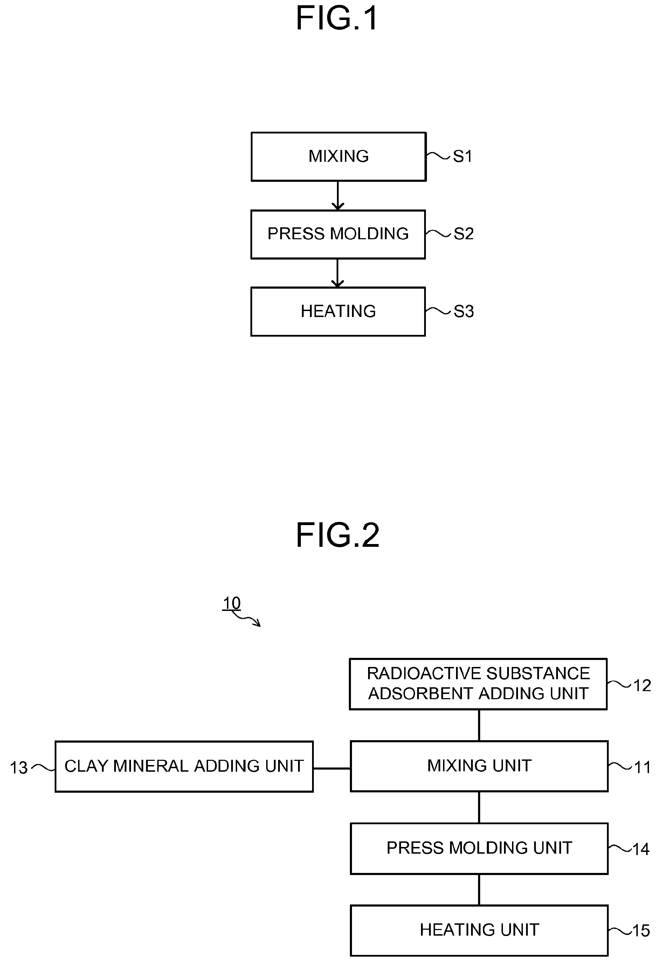

A disposal method for a radioactive substance adsorbent of the embodiment will be described. FIG. 1 is a flowchart showing the disposal method for the radioactive substance adsorbent of the embodiment. The disposal method for the radioactive substance adsorbent is a method for disposing a radioactive substance adsorbent including a mixing step S1 mixing a radioactive substance adsorbent and a clay mineral, a pressing step S2 press molding a mixture of the radioactive substance adsorbent and the clay mineral mixed in the mixing step S1 of mixing, the mixture having been obtained by mixing, and a heating step S3 heating a molded mixture of the radioactive substance adsorbent and the clay mineral press molded in the pressing step S2 of press molding, the molded mixture having been obtained by press molding. In the disposal method for the radioactive substance adsorbent of the embodiment, a solidified body in which radioactive cesium is immobilized is obtained by processing the radioactive substance adsorbent in the steps S1 to S3.

In the mixing step S 1, the radioactive substance adsorbent and the clay mineral are mixed so that a mixture of the radioactive substance adsorbent and the clay mineral is produced. The radioactive substance adsorbent used in the mixing step S1 contains ferrocyanide such as Prussian blue (ferric ferrocyanide) represented by a general formula (1) below, for example.

M⁴⁺[Fe(II)(CN)₆]⁴⁻ (M=Fe, Co, Ni, Zn, or the like) (1)

Further, as the radioactive substance adsorbent, it is possible to use one which has adsorbed radioactive cesium in a radioactive waste liquid, for example.

As the clay mineral used in the mixing step S1, it is preferable to use a silicate mineral such as vermiculite or kaolin. The clay mineral has a layer structure, and can incorporate a radioactive substance between layers. One kind of clay mineral may be used independently and two or more kinds of clay minerals may be used combinedly.

In the mixing step S 1, an amount of the radioactive substance adsorbent at a time of mixing the radioactive substance adsorbent and the clay mineral, that is, a ratio of the radioactive substance adsorbent, is preferable to be 50 mass% or more to 80 mass% or less in relation to a total amount of the radioactive substance adsorbent and the clay mineral in the mixing step S1. When the ratio of the radioactive substance adsorbent exceeds 80 mass%, a strength of a solidified body becomes insufficient. Further, when the ratio of the radioactive substance adsorbent is less than 50 mass%, waste is increased.

Next, the mixture of the radioactive substance adsorbent and the clay mineral, the mixture having been obtained by mixing in the mixing step S1, is press molded by using a press molding apparatus or the like, for example (pressing step S2). Thereby, the radioactive substance having been adsorbed in the clay mineral can be immobilized more firmly in the clay mineral.

A pressing pressure of the press molding to the mixture in the pressing step S2 is preferable to be 200 kg/cm² or more to 900 kg/cm² or less, and is more preferable to be 300 kg/cm² or more to 900 kg/cm² or less. When the pressing pressure of the press molding is less than 200 kg/cm², a strength of the solidified body becomes insufficient. Further, when the pressing pressure of the press molding exceeds 900 kg/cm², a workability is reduced.

Next, the molded mixture of the radioactive substance adsorbent and the clay mineral, the molded mixture having been obtained by press molding in the pressing step S2, is heated by using a heating furnace, for example (heating step S3). Thereby, ferrocyanide contained in the radioactive substance adsorbent is oxidative decomposed. Further, by heating, the radioactive substance having been adsorbed in the clay mineral is immobilized more firmly in the clay mineral.

When the vermiculite or the kaolin that is the clay mineral is heated to 700°C or more, its crystal structure changes to a crystal structure of pollucite. On this occasion, if the radioactive cesium is mixed in the vermiculite or the kaolin, the cesium is incorporated into the crystal structure of the pollucite. As described above, when the vermiculite or the kaolin is heated to 700°C or more, it is possible to confine the cesium in the crystal structure. Therefore, by heating the clay mineral, an immobilization capability of the radioactive substance can be improved. Further, in order to oxidative decompose the ferrocyanide efficiently, heating in the heating step S3 is preferable to be carried out in an oxidation atmosphere.

A heating temperature of the molded mixture in the heating step S3 is not limited in particular as long as being equal to or more than a temperature where the ferrocyanide is oxidative decomposed, for example, about 300°C or more, but is preferable to be 600°C or more and is more preferable to be 700°C or more. If the heating temperature of the heating is 600°C or more, the ferrocyanide can be oxidative decomposed more perfectly. Further, the radioactive substance can be immobilized more firmly in the solidified body. However, when the heating temperature is too high, the radioactive substance could become easy to be eluted from the solidified body due to further change of the crystal structure of the clay mineral having changed to the pollucite. Therefore, the heating temperature of the heating is preferable to be 1100°C or less. Further, a heating time of the molded mixture in the heating step S3 can be changed properly in accordance with a kind of the clay mineral to be used, the mixture ratio of the radioactive substance adsorbent and the clay mineral, a pressing pressure, or the like, and the heating time of the heating is about 1 hour, for example.

The solidified body obtained as above is excellent in strength. Further, the solidified body can immobilize the radioactive substance firmly in the inside thereof. Further, since cyan hardly remains in the solidified body, elution of the cyan from the solidified body can be suppressed even if the solidified body is exposed to rainwater and groundwater.

Note that when the radioactive substance adsorbent is heated, nitrogen oxide gas could be generated due to oxidative decomposition of cyan. Therefore, the disposal method of the radioactive substance adsorbent of the embodiment is preferable to further include a removing step removing the nitrogen oxide gas. The removing step removing the nitrogen oxide gas can be carried out, for example, by a method in which exhaust gas containing the nitrogen oxide gas generated by heating the molded mixture containing the radioactive substance adsorbent and the clay mineral in the heating step S3 is brought into contact with an adsorbent adsorbing the nitrogen oxide gas such as zeolite and the nitrogen oxide gas contained in the exhaust gas is adsorbed by the adsorbent.

Next, a disposal apparatus for a radioactive substance adsorbent of the embodiment will be described. FIG. 2 is a schematic diagram showing the disposal apparatus 10 for the radioactive substance adsorbent of the embodiment. The disposal apparatus 10 for the radioactive substance adsorbent is used for the above-described disposal method for the radioactive substance absorbent. The disposal apparatus 10 includes a mixing unit 11 configured to mix the radioactive substance adsorbent containing ferrocyanide and the clay mineral to producing a mixture of the radioactive substance adsorbent and the clay mineral, press molding unit 14 configured to press molding the mixture of the radioactive substance adsorbent and the clay mineral which have been mixed in the mixing unit 11 to produce a molded mixture of the radioactive substance adsorbent and the clay mineral, the press molding unit 14 being constituted by a mold unit and a press unit, and a heating unit 15 configured to heat the molded mixture of the radioactive substance adsorbent and the clay mineral which have been press molded in the press molding unit 14 to produce a solidified body. The mold unit is configured to mold the mixture of the clay mineral and the radioactive substance absorbent mixed in the mixing unit 11. The press unit is configured to press the mixture supplied from the mold unit. Further, the disposal apparatus 10 may include a radioactive substance adsorbent adding unit 12 configured to add the radioactive substance adsorbent to the mixing unit 11, and a clay mineral adding unit 13 configured to add the clay mineral to the mixing unit 11. Further, the disposal apparatus 10 may include a nitrogen oxide gas removing unit configured to remove nitrogen oxide gas generated from the heating unit 15 as necessary. Note that the mold unit and the press unit may be integrally composed or separately composed. The above-described press molding unit 14 is constituted by the mold unit and the press unit integrally, and molds simultaneously with presses the mixture of the radioactive substance adsorbent and the clay mineral. In the case where the press molding unit 14 is constituted by the mold unit and the press unit separately, the mixture of the radioactive substance adsorbent and the clay mineral is molded in the mold unit and then supplied to the press unit to be pressed in the press unit.

According to the disposal method and disposal apparatus for the radioactive substance adsorbent of the embodiment, it is possible to efficiently dispose the radioactive substance adsorbent containing the ferrocyanide to which the radioactive substance has been adsorbed and to produce the solidified body in which elution of the cyan is efficiently suppressed.

### [Examples]

Hereinafter, detailed explanation is carried out with reference to examples. Note that the present invention is not limited by these examples in any way.

### (Example 1)

Iron ferrocyanide was immersed in an aqueous solution of radioactive cesium (137Cs) at a liquid-solid ratio of 10 mL/g for about 24 hours, so that the iron ferrocyanide adsorbed radioactive cesium. Vermiculite and the iron ferrocyanide having adsorbed the radioactive cesium which had been obtained above were mixed and then press molded. Thereafter, a molded mixture was heated at 1000°C, so that a solidified body was fabricated. Here, mixture ratios of the vermiculite and the iron ferrocyanide were set to 50 mass% and 80 mass% by a mass ratio (hereinafter, referred to as a "mixture ratio of iron ferrocyanide") represented by {iron ferrocyanide / (vermiculite + iron ferrocyanide)} x 100 (mass%). Further, press molding pressures were set to 300 kg/cm² and 900 kg/cm².

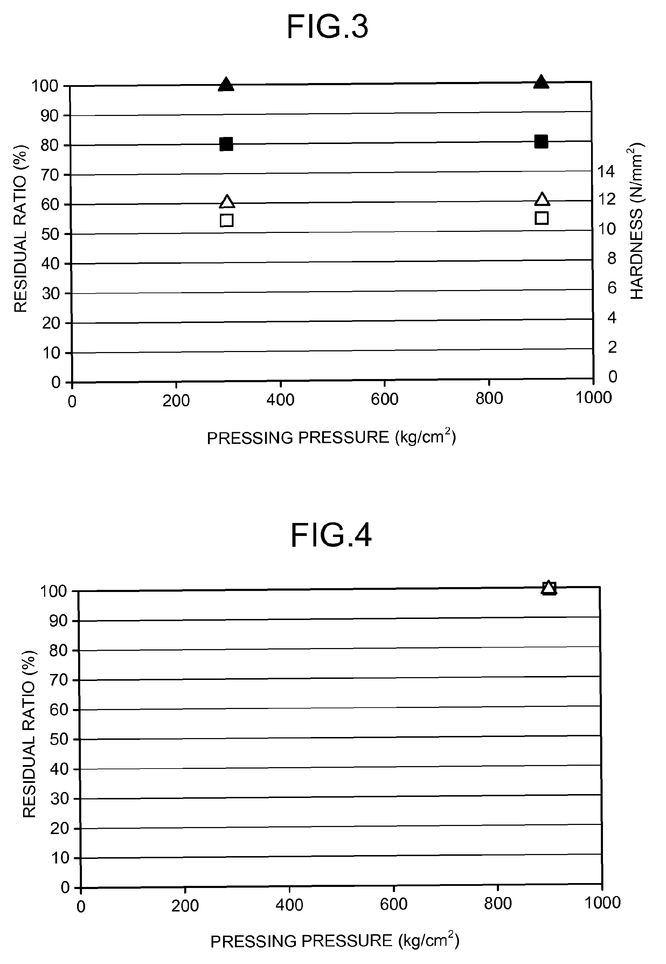

A residual ratio of the cesium in the obtained solidified body was calculated by a formula (2) below. Measured results are shown in FIG. 3, with the press molding pressure being indicated by a horizontal axis, the residual ratio of the cesium being indicated by a vertical axis (left axis), and a hardness of the solidified body being indicated by a vertical axis (right axis). In FIG. 3, a black triangle indicates the residual ratio of the cesium at the mixture ratio of the iron ferrocyanide of 50 mass%, a white triangle indicates the hardness of the solidified body at the mixture ratio of the iron ferrocyanide of 50 mass%, a black quadrangle indicates the residual ratio of the cesium at the mixture ratio of the iron ferrocyanide of 80 mass%, and a white quadrangle indicates the hardness of the solidified body at the mixture ratio of the iron ferrocyanide of 80 mass%, respectively.

residual ratio (%) = (radioactivity (Bq) after heating / radioactivity (Bq) before heating) x 100 ...(2)

Further, in the above, for the solidified body obtained at the mixture ratio of the iron ferrocyanide of 50 mass%, an elution test of cyan was carried out. The elution test of the cyan was carried out as follows. First, the solidified body was immersed in water at a liquid-solid ratio of 10 ml/g and stirring was carried out for 6 hours. Next, the solidified body and the water were solid-liquid separated each other and a concentration of all cyan and a concentration of free cyan in the water were measured. The concentration of all the cyan and the concentration of the free cyan were measured by using an auto analyzer (manufactured by BL TEC K.K., AACS IV) according to JIS K 0102:2013 38. 1 and 38.3. Results are shown in Table 1.

**[TABLE 1]**

| SOLIDIFIED BODY PRODUCING CONDITION | | | | CYAN ELUTION TEST | |
|---|---|---|---|---|---|
| CLAY MINERAL | MIXTURE RATIO OF IRON FERROCYANIDE | PRESSING PRESSURE | HEATING TEMPERATURE | CONCENTRATION OF ALL CYAN | CONCENTRATION OF FREE CYAN |
| KIND | (MASS%) | (kg/cm²) | (°C) | (mg/L) | (mg/L) |
| VERMICULITE | 50 | 900 | 600 | <0.01 | <0.01 |
| | | | 1000 | <0.01 | <0.01 |

As shown in FIG. 3 and Table 1, in a case where the vermiculite was used, the residual ratio of the cesium at a time of the mixture ratio of the iron ferrocyanide of 50% was 100%, the residual ratio of the cesium at a time of the mixture ratio of the iron ferrocyanide of 80% was 80%. Thereby, it is understood that when the mixture of the iron ferrocyanide having adsorbed the cesium and the vermiculite is heated, the iron ferrocyanide is oxidative decomposed and the cesium is transferred to the vermiculite of the solidified body to fabricate a solidified body in which the cesium is stably immobilized.

### (Example 2)

A solidified body was fabricated by using kaolin instead of the vermiculite in the example 1. The solidified bodies were fabricated, with mixture ratios ({iron ferrocyanide / (kaolin + iron ferrocyanide)} x 100) of the kaolin and the iron ferrocyanide of 50 mass% and 80 mass%, a heating temperature of 1000°C, and a press molding pressure of 900 kg/cm². A residual ratio of cesium was measured for the obtained solidified body. Measured results are shown in FIG. 4, with the press molding pressure being indicated by a horizontal axis and the residual ratio of the cesium being indicated by a vertical axis. In FIG. 4, a white triangle indicates the residual ratio of the cesium at the mixture ratio of the iron ferrocyanide of 50 mass%, and a white quadrangle indicates the residual ratio of the cesium at the mixture ratio of the iron ferrocyanide of 80 mass%, respectively.

As shown in FIG. 4, also in a case where the kaolin was used instead of the vermiculite, the residual ratio of cesium was 100%. As described above, it is understood that, also in a case where the kaolin is used, the solidified body in which the residual ratio of the cesium is high and in which the cesium is stably immobilized can be fabricated, similarly to in a case where the vermiculite is used.

### (Comparative Example 1)

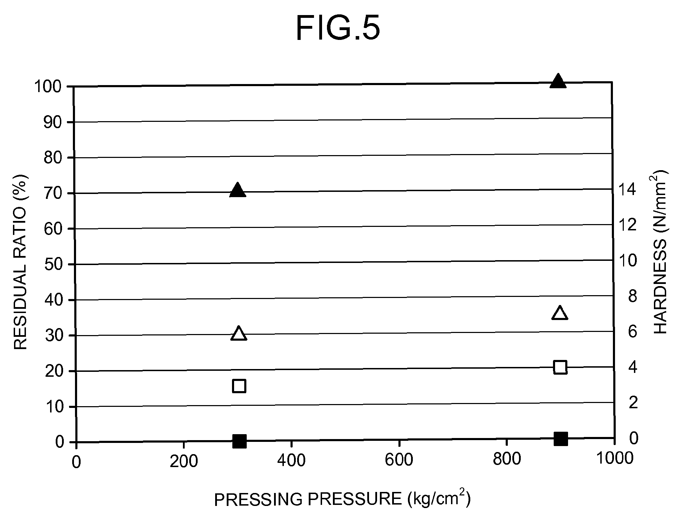

A solidified body was fabricated by using zeolite instead of the vermiculite in the example 1. The solidified bodies were fabricated, with mixture ratios ({iron ferrocyanide / (zeolite + iron ferrocyanide)} x 100) of the zeolite and the iron ferrocyanide of 50 mass% and 80 mass%, a heating temperature of 1000°C, and press molding pressures of 300 kg/cm² and 900 kg/cm². For the obtained solidified body, measurements of a residual ratio of cesium and a hardness were carried out similarly to in the example 1. Measured results are shown in FIG. 5, with the press molding pressure being indicated by a horizontal axis, the residual ratio of the cesium being indicated by a vertical axis (left axis), and the hardness of the solidified body being indicated by a vertical axis (right axis). In FIG. 5, a black triangle indicates the residual ratio of the cesium at the mixture ratio of the iron ferrocyanide of 50 mass%, a white triangle indicates the hardness of the solidified body at the mixture ratio of the iron ferrocyanide of 50 mass%, a black quadrangle indicates the residual ratio of the cesium at the mixture ratio of the iron ferrocyanide of 80 mass%, and a white quadrangle indicates the hardness of the solidified body at the mixture ratio of the iron ferrocyanide of 80 mass%, respectively.

As shown in FIG. 3 and FIG. 5, in the case where the vermiculate was used, a value of the hardness of the solidified body is larger compared with the case where the zeolite was used. Based on this fact, it is understood that the solidified body excellent in strength can be fabricated by using the vermiculite.

### (Confirmation of Pollucite Structure)

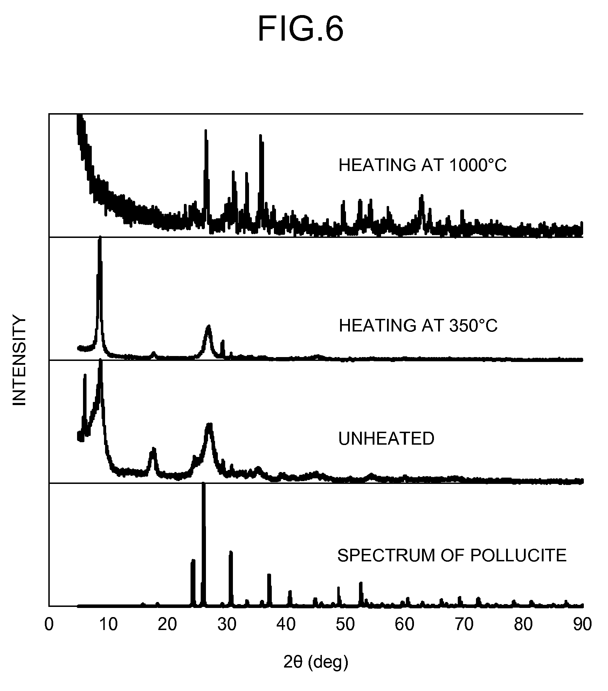

A crystal structure of the solidified boy obtained by mixing and heating the iron ferrocyanide and the vermiculite in the example 1 was investigated. With the mixture ratio of the iron ferrocyanide of 50 mass%, for a sample before heating, for the solidified body obtained by heating at 350°C, and for the solidified body obtained by heating at 1000°C, crystal diffraction spectra were measured by XRD (X-ray diffraction method). Measured results are shown together with an X-ray diffraction spectrum of pollucite in FIG. 6.

Based on FIG. 6, it is understood that, in the solidified body obtained by heating at 1000°C, a spectrum peak resulted from a crystal structure of the pollucite is observed. Thereby, it is understood that when heating to about 1000°C, for example, a crystal structure of the vermiculite changes to a crystal structure of the pollucite. Therefore, it is understood that cesium can be made to remain in the solidified body at a high residual ratio when heated to about 1000°C.

While certain embodiments of the present invention have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions. For example, the radioactive substance adsorbent disposed in the embodiments is only required for containing ferrocyanide, and the radioactive substance adsorbent does not necessarily have to adsorb a radioactive substance. Even if the radioactive substance adsorbent containing ferrocyanide does not adsorb the radioactive substance, it is possible to dispose such radioactive substance adsorbent based on Examples as needed. The radioactive substance adsorbent containing ferrocyanide to which the radioactive substance is adsorbed can be disposed based on Examples to produce the solidified body that is excellent in strength and suppresses the elution of the cyan.

## Claims

1. A disposal method for a radioactive substance adsorbent, comprising:
a mixing step (S1) mixing a clay mineral and the radioactive substance adsorbent, the radioactive substance adsorbent containing ferrocyanide;
a pressing step (S2) press molding the radioactive substance adsorbent and the clay mineral which have been mixed in the mixing step (S1); and
a heating step (S3) heating the radioactive substance adsorbent and the clay mineral which have been press molded in the pressing step (S2).

2. The disposal method for the radioactive substance adsorbent according to claim 1,
wherein the clay mineral includes at least one of vermiculite and kaolin.

3. The disposal method for the radioactive substance adsorbent according to claim 1 or 2,
wherein a ratio of the radioactive substance adsorbent in relation to a total amount of the radioactive substance adsorbent and the clay mineral in the mixing step (S1) is 80 mass% or less.

4. The disposal method for the radioactive substance adsorbent according to any one of claims 1 to 3,
wherein a pressing pressure of the press molding in the pressing step (S2) is 200 kg/cm² or more.

5. The disposal method for the radioactive substance adsorbent according to any one of claims 1 to 4,
wherein a heating temperature of the heating in the heating step (S3) is 600°C or more.

6. The disposal method for the radioactive substance absorbent according to any one of claims 1 to 5, further comprising
a removing step removing nitrogen oxide gas generated in the heating step (S3).

7. A disposal apparatus (10) for a radioactive substance adsorbent, comprising:
a mixing unit (11) configured to mix a clay mineral and the radioactive substance adsorbent, the radioactive substance absorbent containing ferrocyanide;
a mold unit (14) configured to mold a mixture of the clay mineral and the radioactive substance absorbent mixed in the mixing unit (11);
a press unit (14) configured to press the mixture supplied from the mold unit (14); and
a heating unit (15) configured to heat the mixture pressed in the press unit (14).
